# EUROPEAN PATENT SPECIFICATION

(11) **EP 2 121 318 B1**
(45) Date of publication and mention of the grant of the patent: **02.06.2010**
(21) Application number: 07856918.3
(22) Date of filing: 19.12.2007
(51) Int. Cl.: B32B 27/32

(54) **FILM**
FOLIE
PELLICULE

(30) Priority: 21.12.2006 EP 06256528
(43) Date of publication of application: 25.11.2009
(73) Proprietor: Borealis Technology OY, 06101 Porvoo (FI)
(72) Inventor: DAVIKNES, Hans Georg, 3960 Stathelle (NO); MYHRE, Ole Jan, 3941 Porsgrunn (NO)
(74) Representative: Campbell, Neil Boyd
(86) International application number: PCT/EP2007/011195
(87) International publication number: WO 2008/074493

(56) References cited:
- WO-A-02/02323
- WO-A-2004/000902
- WO-A-2006/037603

## Description

This invention relates to a thin film with excellent mechanical properties that can be formed into bags or sacks for packaging. In particular the invention concerns a multilayer film that is uniaxially oriented in the machine direction (MD) and which comprises a certain combination of linear low density polyethylene polymers. The invention also relates to the preparation process of said film and to the use of said film in packaging, e.g. for producing sacks and bags.

### Background art

Polymers are widely used in the manufacture of packaging for a great variety of materials. One typical application area is bags and sacks for the packaging of relatively lightweight material (e.g. up to 5 kg loads per bag).

Polymers are also used in the manufacture of packaging for higher material loads, e.g. bags and sacks for material weights up to 25 kg or even 50 kg. Such heavyweight applications place high demands on the packaging usable therefor, in particular good mechanical properties are required. Examples of high weight applications include heavy duty sacks, e.g. heavy duty shipping sacks (HDSS) and bags for the packaging of materials such as powders (e.g. cement mix), polymer beads, natural materials (e.g. compost, stones and sand) and waste materials.

Sacks and bags for use in packaging, transportation and storage therefore need good mechanical properties, such as puncture resistance and certain tear resistance properties, with the exact demand depending on the end application area. Nevertheless, bags and sacks, especially heavy duty shipping sacks, have tended to be made of thick films to provide good mechanical properties.

Low density polyethylene (LDPE), linear low density polyethylene (LLDPE) or blends thereof are often used in packaging articles.

It is also known that to make polyethylene films having acceptable tensile strength for use in packaging, the film can be uniaxially stretched. At the same time, however, other mechanical properties, such as tear resistance in the MD are typically compromised.

Reducing film thickness in packaging applications is highly desirable due to material and thus cost savings.

There remains therefore a continuous need for alternative polymer films suitable for making bags and sacks with an appropriate balance of mechanical properties depending on the desired end application area. There is particularly a need for further film materials with excellent impact strength at lower film thicknesses.

### Description of invention

As used herein the terms LLDPE composition, znLLDPE composition, mLLDPE composition, LDPE composition and polymer composition refer to LLDPE polymer, znLLDPE polymer, mLLDPE polymer, LDPE polymer and polymer respectively. In a LLDPE composition, znLLDPE composition, mLLDPE composition, LDPE composition and a composition, the referenced polymer may be present as a single polymer (i.e. as a sole polymer) or it may be present within a mixture, e.g. in a mixture of polymers. Preferred LLDPE compositions, znLLDPE compositions, mLLDPE compositions, LDPE compositions and polymer compositions consist of LLDPE polymer, znLLDPE polymer, mLLDPE polymer, LDPE polymer and polymer respectively.

As used herein the terms LLDPE, znLLDPE, mLLDPE, MDPE, HDPE and LDPE refer to LLDPE polymer, znLLDPE polymer, mLLDPE polymer, MDPE polymer, HDPE polymer and LDPE polymer respectively.

### Multilayer film of invention

The present inventors have now found that a uniaxially oriented film which comprises a certain combination of linear low density polyethylenes (LLDPEs) provide advantageous mechanical properties, namely at least an excellent impact resistance at film thicknesses considerably lower than the film thicknesses used in the prior art for such applications. Moreover, these mechanical properties are similar or even improved compared to those of thicker prior art films presently used in the packaging field.

Furthermore, the film of the invention has preferably a desirable balance between said impact resistance and other mechanical properties, particularly tear resistance (determined in machine direction, MD). The property balance between impact resistance and tear resistance can be optimised and adapted within the concept of the invention depending on the needs for the desired end application.

Thus the present invention provides thinner film material with similar or even improved mechanical properties compared to films currently available for a wide variety of packaging applications.

Thus the invention is directed to a uniaxially oriented multilayer film comprising at least (i) a layer (A) and (ii) a layer (B), wherein
said layer (A) comprises a linear low density polyethylene (LLDPE) comprising (e.g. selected from):
- a multimodal LLDPE produced using a Ziegler Natta catalyst (znLLDPE), or
- a LLDPE produced using a single site catalyst (mLLDPE) or
- a mixture of a mLLDPE and a multimodal znLLDPE,
said layer (B) comprises a multimodal LLDPE, and
said multilayer film is in the form of a stretched film which is uniaxially oriented in the machine direction (MD) in a draw ratio of at least 1:3.

The term "multilayer film" is used herein to denote a film comprising at least two different layers, e.g. layers (A) and (B) are preferably different.

Preferred films of the invention further comprise (iii) a layer (C). Layer (C) (iii) preferably comprises a LLDPE. Preferably layer (C) is different to layer (B).

The invention also provides a process for the preparation of a multilayer film as hereinbefore defined comprising forming a film by extruding, preferably coextruding,
a composition (a) comprising a multimodal znLLDPE, a mLLDPE or a mixture of znLLDPE and mLLDPE as layer (A),
a composition (b) comprising a multimodal LLDPE as layer (B), and
optionally, a composition (c) comprising a LLDPE as layer (C), and stretching said film in the machine direction in a draw ratio of at least 1:3, preferably in a draw ratio of 1:3 to 1:10. A film obtainable by the process hereinbefore described forms a further aspect of the invention.

Furthermore, the invention provides use of a film as hereinbefore described in packaging.

Viewed from a still further aspect, the invention provides an article, preferably a packaging article, such as a sack or bag, comprising a film as hereinbefore described.

In one preferable embodiment of the invention the uniaxially oriented in MD multilayer film has an advantageous property balance between the impact resistance and the tear resistance (in MD) at decreased film thicknesses. The film of this embodiment is highly suitable as a packaging material for lightweight and heavyweight/heavy duty applications. The film thickness including the starting thickness before stretching and draw ratio may be selected to provide the final oriented (stretched) film with a final thickness suitable for the desired end application. The film of the invention is highly suitable for e.g. lightweight applications of loads up to 5 kg, e.g. 2-5 kg.

The term "multilayer film is in the form of a stretched film which is uniaxially oriented in the machine direction (MD)" means that the film is oriented, i.e. stretched, uniaxially to at least 3 times its original length in the machine direction during its manufacture, before the use thereof in the desired end application, preferably as a packaging material (e.g. before the preparation of the packaging article, such as bag or sack). Also preferably, the film is oriented only uniaxially in MD. Thus the film of the invention is preferably not oriented biaxially in MD and in TD, i.e. transverse direction.

The terms "extruded", or respectively, "coextruded" and "coextrudate", as used herein mean well known film (co)extrusion, preferably blown film (co)extrusion, processes and the products thereof.

The multilayer film of the invention has at least two layers, e.g. 2, 3, 4 or 6 layers. Preferably the multilayer film has two or three layers, especially three layers.

A particularly preferred multilayer film comprises at least three layers (e.g. 3 layers) in the following order:
(i) layer (A),
(ii) layer (B) and
(iii) layer (C).

The polymer composition of layer (A) and the polymer composition of layer (C) can be the same or different. Preferably layers (A) and (C) comprise the same polymer composition, more preferably layers (A) and (C) are identical. Thus a further preferred multilayer film comprises at least three layers (e.g. 3 layers) in the following order:
(i) layer (A),
(ii) layer (B) and
(iii) layer (A)

### Film layers

The term "consisting of" used below in relation to film layer materials is meant to exclude only the presence of other polyolefin components, preferably other polymers. Thus said term includes the presence of additives, e.g. conventional film additives, i.e. each layer independently may contain conventional film additives such as antioxidants, UV stabilisers, acid scavengers, nucleating agents, anti-blocking agents, slip agents etc as well as polymer processing agent (PPA).

### Layer (A)

Said layer (A) comprises a linear low density polyethylene (LLDPE) which is preferably selected from
- a mLLDPE, or
- a znLLDPE which is multimodal with respect to molecular weight distribution as defined later below, or
- a mixture of a mLLDPE and a multimodal znLLDPE.

Accordingly, in a first preferable embodiment (i) of the invention, said layer (A) comprises a mixture of a multimodal znLLDPE and mLLDPE. The mLLDPE may be unimodal or multimodal with respect to molecular weight distribution as defined below. Preferably, the mLLDPE consists of a unimodal mLLDPE or a multimodal mLLDPE. In this embodiment (i) a layer (A) preferably comprises 50-90 wt% of znLLDPE, more preferably 70-85 wt% of znLLDPE. Layer (A) of the embodiment (i) preferably comprises 10-50 wt% mLLDPE, more preferably 15-30 wt% of mLLDPE. Layer (A) is preferably free of another LLDPE.

Layer (A) of embodiment (i) may optionally comprise one or more additional polymer components other than LLDPE, such as a medium density polyethylene (MDPE), a high density polyethylene (HDPE), both produced in low pressure polymerisation, or a low density polyethylene (LDPE) produced in high pressure polymerisation, such as LDPE homopolymer or LDPE copolymer, such as ethylene acrylate copolymer. Said additional polymers are well known. If present, such additional polymers are preferably in an amount of 50 wt% or less, preferably 5-50 wt%, more preferably 10-30 wt%, of the layer (A). Preferably, in embodiment (i) layer (A) consists of a multimodal znLLDPE composition and a mLLDPE composition.

In a second preferable embodiment (ii) of the invention, said layer (A) comprises a mLLDPE composition which can be unimodal or multimodal with respect to molecular weight distribution as defined below.

In said embodiment (ii) a layer (A) preferably comprises at least 50 wt%, more preferably at least 70 wt% of mLLDPE polymer. Layer (A) is preferably free of another LLDPE.

Layer (A) of embodiment (ii) may optionally comprise one or more additional polymer components other than LLDPE, such as a medium density polyethylene (MDPE), a high density polyethylene (HDPE), both produced in low pressure polymerisation, or a low density polyethylene (LDPE) produced in high pressure polymerisation, such as LDPE homopolymer or LDPE copolymer, such as ethylene acrylate copolymer. Said additional polymers are well known. If present, such additional polymers are preferably present in an amount of 50 wt% or less, preferably 5-50 wt%, more preferably 10-30 wt%. The additional polymer is preferably a LDPE homopolymer, herein abbreviated as LDPE.

In one particularly preferred embodiment (ii) of the invention, a layer (A) comprises, more preferably consists of, mLLDPE and LDPE. In this case, layer (A) preferably comprises 50-95 wt% mLLDPE, more preferably 70-90 wt% mLLDPE. Correspondingly, layer (A) preferably comprises 5-50 wt% LDPE, more preferably 10-30 wt% LDPE.

In a third preferable embodiment (iii) of the invention, said layer (A) comprises a multimodal znLLDPE. In embodiment (iii) a layer (A) preferably comprises at least 50 wt%, preferably at least 80 wt%, more preferably at least 90 wt% and in some embodiments even 95 wt% of multimodal znLLDPE. In this embodiment layer (A) is preferably free of other LLDPEs. Layer (A) of embodiment (iii) may comprise one or more additional polymer components other than LLDPE, such as a medium density polyethylene (MDPE), a high density polyethylene (HDPE), both produced in low pressure polymerisation, or a low density polyethylene (LDPE) produced in high pressure polymerisation, such as LDPE homopolymer or LDPE copolymer, such as ethylene acrylate copolymer. Said additional polymers are well known. If present, such additional polymers preferably do not contribute more than 50 wt% of the layer (A), preferably 20 wt% or less, more preferably 5-10 wt%.

In preferred embodiment (iii), said layer consists of multimodal znLLDPE.

### Layer (B)

Layer (B) preferably comprises at least 50 wt%, preferably at least 60 wt%, more preferably at least 70 wt% of a multimodal LLDPE. In some embodiments even about 80 wt% or more of multimodal LLDPE is preferred. Multimodal LLDPE is preferably a multimodal znLLDPE composition.

In one preferable embodiment (iv) of the invention said layer (B) comprises other polymer components, such as another LLDPE having the density 940 kg/m³ or less, a MDPE, HDPE or LDPE including LDPE homopolymer and LDPE copolymer, such as ethylene acrylate copolymer. Said additional polymers are well known. If present, such additional polymers are preferably in an amount of 50 wt% or less, preferably 40 wt%, more preferably such as 10-30 wt%. In a preferred embodiment (iv) of the film of the invention, layer (B) comprises a mixture of two or more LLDPE, preferably a multimodal znLLDPE and a mLLDPE which can be unimodal mLLDPE or multimodal mLLDPE. Such a layer (B) comprises, preferably consists of, a mixture of at least 50 wt%, preferably 60-95 wt%, more preferably 70-90 wt% of a multimodal znLLDPE and 50 wt% or less, preferably 5-40 wt%, more preferably 10-30 wt% of unimodal or multimodal mLLDPE.

In a most preferable embodiment (v) of the invention said layer (B) consists of a multimodal znLLDPE polymer and a multimodal znMDPE polymer.

### Layer (C)

Said layer (C), when present, preferably has a polymer composition as described in relation to layer (A) above. As mentioned earlier, the polymer composition present in layer (A) and the polymer composition present in layer (C) may be the same or different in a ABC film of the invention. Preferably layer (A) and layer (C) have the same polymer composition.

### Polymer properties

The polymer compositions, e.g. for LLDPE, znLLDPE, mLLDPE, LDPE etc., that are suitable for the layers (A), B and (C) as defined above are described herein generally and are thus applicable to each layer of the invention.

The term "multimodal" used for any polymer composition of the invention, e.g. for linear low density polyethylene composition, referred below as LLDPE, means, if otherwise not specified, multimodality with respect to molecular weight distribution and includes also bimodal polymer.

Usually, a polyethylene, e.g. LLDPE composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer, e.g. LLDPE, there is by definition a lower molecular weight component (LMW) and a higher molecular weight component (HMW). The LMW component has a lower molecular weight than the higher molecular weight component. Preferably, in a multimodal polymer, e.g. LLDPE, of use in this invention at least one of the LMW and HMW components is a copolymer of ethylene. Further preferably, at least HMW component is an ethylene copolymer. Further preferably, also the lower molecular weight (LMW) component may be an ethylene copolymer. Alternatively, if one of the components is a homopolymer, then LMW is the preferably the homopolymer.

Alternatively the multimodal LLDPE may comprise other polymer components, e.g. up to 10 % by weight of a well known polyethylene prepolymer (obtainable from a prepolymerisation step as well known in the art). In case of such prepolymer, the prepolymer component is comprised in one of LMW and HMW components, preferably LMW component, as defined above.

The term "ethylene copolymer" is again used in this context to encompass polymers comprising repeat units deriving from ethylene and at least one other C₃₋₁₂ alpha olefin monomer. Preferred copolymers are binary and comprise a single comonomer or are terpolymers and comprise two or three comonomers. In any copolymeric HMW component, at least 0.25 mol-%, preferably at least 0.5 mol-%, e.g. at least 1-mol%, such as up to 10 mol-%, of repeat units derive from the comonomer. Ethylene preferably forms the majority of the HMW component.

The preferred LLDPE composition is defined further below. The given preferable property ranges are applicable to LLDPE compositions in general and apply herein particularly to a multimodal and unimodal LLDPE, particularly to a multimodal znLLDPE and to a uni- or multimodal mLLDPE, unless otherwise stated below.

Accordingly, the LLDPE composition may have a density of no more than 940 kg/m³, e.g. 905-940 kg/m³. For multimodal znLLDPE in particular, the density is preferably more than 915 kg/m³. In certain end applications multimodal znLLDPE preferably has a density of 915 to 935 kg/m³.

The melt flow rate, MFR₂ of the LLDPE is preferably in the range 0.01 to 20 g/10min, e.g. 0.05 to 10 g/10min, preferably 0.1 to 6.0 g/10min. For the multimodal znLLDPE's in particular, MFR₂ is preferably in the range of 0.1 to 5 g/10min.

The MFR₂₁ of the LLDPE, preferably a multimodal znLLDPE, may be in the range 5 to 500, preferably 10 to 200 g/10min. The Mw of the LLDPE, preferably a multimodal znLLDPE, may be in the range 100,000 to 300,000, preferably 150,000 to 270,000. The Mw/Mn of the LLDPE may be in the range 10 to 30, preferably the Mw/Mn of a multimodal znLLDPE is 10 to 25.

The LLDPE, preferably a multimodal znLLDPE, may be formed from ethylene along with at least one C₃₋₁₂ alpha-olefin comonomer, e.g. 1-butene, 1-hexene or 1-octene. Preferably, the LLDPE, preferably multimodal znLLDPE, is a binary copolymer, i.e. the polymer contains ethylene and one comonomer, or a terpolymer, i.e. the polymer contains ethylene and two or three comonomers. Preferably, the LLDPE, preferably a multimodal znLLDPE, comprises an ethylene hexene copolymer, ethylene octene copolymer or ethylene butene copolymer. The amount of comonomer present in the LLDPE, preferably a multimodal znLLDPE, is preferably 0.5 to 12 mol%, e.g. 2 to 10% mole relative to ethylene, especially 4 to 8% mole. Alternatively, comonomer contents present in the LLDPE, preferably a multimodal znLLDPE, may be 1.5 to 10 wt%, especially 2 to 8 wt% relative to ethylene.

As stated above a multimodal LLDPE comprises at least a LMW component and a HMW component.

The LMW component of LLDPE preferably has a MFR₂ of at least 50, preferably 50 to 3000 g/10 min, more preferably at least 100 g/10 min. In case of znLLDPE the preferred range of MFR₂ of the LMW component is e.g. 110 to 500 g/10 min. The molecular weight of the low molecular weight component should preferably range from 20,000 to 50,000, e.g. 25,000 to 40,000.

The density of the lower molecular weight component may range from 930 to 980 kg/m³, e.g. 940 to 970 kg/m³, more preferably 945 to 955 kg/m³ in the case of copolymer and 940 to 975 kg/m³, especially 960 to 972 kg/m³ in the case of homopolymer.

The lower molecular weight component has preferably from 30 to 70 wt%, e.g. 40 to 60% by weight of the multimodal LLDPE with the higher molecular weight component forming 70 to 30 wt%, e.g. 40 to 60% by weight.

The higher molecular weight component has a lower MFR₂ and a lower density than the lower molecular weight component.

The higher molecular weight component has preferably an MFR₂ of less than 1 g/10 min, preferably less than 0.5 g/10 min, especially less than 0.2 g/10min, and a density of less than 915 kg/m³, e.g. less than 910 kg/m³, preferably less than 905 kg/m³. The Mw of the higher molecular weight component may range from 100,000 to 1,000,000, preferably 250,000 to 500,000.

As used herein, the mLLDPE polymer is an ethylene copolymer having a density of 940 kg/m³ or less. Preferred mLLDPE's may have a density of 905-940 kg/m³, more preferably 910 to 937 kg/m³, e.g. 935 kg/m³ or below. In one preferable embodiment even densities of 925 kg/m³ or below are highly feasible.

The mLLDPE is formed from ethylene along with at least one C₃₋₂₀ alpha-olefin comonomer, preferably C₃₋₁₂ alpha-olefin comonomer, e.g. 1-butene, 1-hexene or 1-octene. Preferably, the mLLDPE is a binary copolymer, i.e. the polymer contains ethylene and one comonomer, or a terpolymer, i.e. the polymer contains ethylene and two or three, preferably two, comonomers. Preferably, the mLLDPE comprises an ethylene hexene copolymer, ethylene octene copolymer, ethylene butene copolymer or a terpolymer of ethylene with 1-butene and 1-hexene comonomers. The amount of comonomer present in the mLLDPE is preferably 0.5 to 12 mol%, e.g. 2 to 10% mole, especially 4 to 8% mole. Alternatively, comonomer contents present in the mLLDPE may be 1.5 to 10 wt%, especially 2 to 8 wt%.

The MFR₂ of mLLDPE's is preferably in the 0.01 or more, preferably 0.1 to 20 g/10min e.g. 0.2 to 10, preferably 0.5 to 6.0, e.g. 0.7 to 4.0 g/10min. Depending on the end use also as low MFR₂ as 2.5 g/10 min or below may be preferred.

The mLLDPE has preferably a weight average molecular weight (Mw) of 100,000-250,000, e.g. 110,000-160,000.

The mLLDPE may be unimodal or multimodal, both are preferable. By unimodal is meant that the molecular weight profile of the polymer comprises a single peak and is produced by one reactor and one catalyst.

The unimodal mLLDPE polymers preferably posses a narrow molecular weight distribution. The Mw/Mn value is preferably 2 to 10, e.g. 2.2 to 4.

Multimodal mLLDPE comprises at least LMW component and HMW component and properties as defined above in relation LLDPE and multimodal znLLDPE. For mLLDPE the preferred ranges of MFR₂ of the LMW component can be both e.g. 50 to 500 g/10 min and 100 to 400 g/10 min.

Both the LMW and HMW components of multimodal mLLDPE are preferably copolymers of ethylene as defined above. In one preferred embodiment the mLLDPE, preferably the multimodal mLLDPE, is a terpolymer, preferably a terpolymer of 1-butene and 1-hexene.

The molecular weight distribution, Mw/Mn, of a multimodal mLLDPE may be e.g. below 30, preferably between 3-10.

LDPE, preferably LDPE homopolymer, that may be present in a layer (A) preferably has a MFR₂ in the range 0.1-20 g/10 min, more preferably 0.3-10 g/10 min, still more preferably 0.5-5 g/10 min. The density of the LDPE is preferably 905-940 kg/m³, more preferably 910 to 937 kg/m³, e.g. 915 to 935 kg/m³ (ISO 1183). The Vicat softening temperature of LDPE present in layer (A) is preferably 60-200 °C, more preferably 80-150 °C, e.g. about 90-110 °C. The Tm of the LDPE present in layer (A) is preferably 70-180 °C, more preferably 90-140 °C, e.g. about 110-120 °C.

HDPE that may be present in the film of the invention has a density of 950 to 980 kg/m³. MDPE that may be present in the film of the invention has a density of 941-949 kg/m³.

### Preparation of polymer

The polymer compositions, e.g. LLDPE, such as znLLDPE and mLLDPE, LDPE, ethylene acrylate copolymers etc., suitable as layer materials of the films of the invention can be any conventional, e.g. commercially available, polymer compositions. Alternatively, suitable polymer compositions can be produced in a known manner according to or analogously to conventional polymerisation processes described in the literature of polymer chemistry.

Unimodal polyethylene, e.g. LLDPE, is preferably prepared using a single stage polymerisation, e.g. slurry or gas phase polymerisation, preferably a slurry polymerisation in slurry tank or, more preferably, in loop reactor in a manner well known in the art. As an example, a unimodal LLDPE can be produced e.g. in a single stage loop polymerisation process according to the principles given below for the polymerisation of low molecular weight fraction in a loop reactor of a multistage process, naturally with the exception that the process conditions (e.g. hydrogen and comonomer feed) are adjusted to provide the properties of the final unimodal polymer.

Multimodal (e.g. bimodal) polymers can be made by mechanical blending two or more, separately prepared polymer components or, preferably, by in-situ blending in a multistage polymerisation process during the preparation process of the polymer components. Both mechanical and in-situ blending is well known in the field.

Accordingly, preferred multimodal polymers, e.g. LLDPE polymers, are prepared by in-situ blending in a multistage, i.e. two or more stage, polymerization or by the use of two or more different polymerization catalysts, including multi- or dual site catalysts, in a one stage polymerization.

Preferably the multimodal polymer, e.g. LLDPE, is produced in at least two-stage polymerization using the same catalyst, e.g. a single site or Ziegler-Natta catalyst. Thus, for example two slurry reactors or two gas phase reactors, or any combinations thereof, in any order can be employed. Preferably however, the multimodal polymer, e.g. LLDPE, is made using a slurry polymerization in a loop reactor followed by a gas phase polymerization in a gas phase reactor.

A loop reactor - gas phase reactor system is marketed by Borealis as a BORSTAR reactor system. Any multimodal polymer, e.g. LLDPE, present in layers is thus preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

MFR₂ is calculated from McAuley's equation 25, where final MFR₂ and MFR₂ after the first reactor is calculated. The use of these equations to calculate polymer properties in multimodal polymers is common place.

The multimodal polymer, e.g. LLDPE, may be made using any conventional catalyst, such as a chromium, single site catalysts, including metallocenes and non-metallocenes as well known in the field, or Ziegler-Natta catalysts as is also known in the art. The preferred are any conventional Ziegler Natta and single site catalysts and the choice of an individual catalyst used to make znLLDPE or mLLDPE, respectively, is not critical.

In case of mLLDPE, metallocene catalysis is preferably used. The preparation of the metallocene catalyst can be carried out according or analogously to the methods known from the literature and is within skills of a person skilled in the field. Thus for the preparation see e.g. EP-A-129 368, WO-A-9856831, WO-A-0034341, EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130. WO2005/002744 describes a preferable catalyst and process for preparing the mLLDPE component.

In case of znLLDPE the polyethylene polymer composition is manufactured using Ziegler-Natta catalysis. Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, EP 810235 and WO 99/51646.

In a very preferable embodiment of the invention the polyethylene composition is produced using a ZN catalysts disclosed in WO 2004/000933 or EP 688794.

Conventional cocatalysts, supports/carriers, electron donors etc can be used.

A LDPE composition, e.g. LDPE homopolymer or LDPE copolymer, may be prepared according to any conventional high pressure polymerisation (HP) process in a tubular or autoclave reactor using a free radical formation. LDPE prepared by high pressure polymerisation in a tubular reactor is preferred. Such HP processes are very well known in the field of polymer chemistry and described in the literature. Further details about high pressure radical polymerisation are, for example, given in WO 93/08222.

MDPE and HDPE can be prepared using the procedure hereinbefore described for LLDPE, but adjusting the process conditions in a manner known to a skilled person to provide the density of MDPE and HDPE.

Layers (A), (B) and, if present, (C) may each independently contain conventional additives such as antioxidants, UV stabilisers, colour masterbatches, acid scavengers, nucleating agents, anti-blocking agents, slip agents etc as well as polymer processing agent (PPA). As well known this can be added to the polymer composition e.g. during the preparation of the polymer of during the film preparation process.

The films of the invention may incorporate one or more barrier layers as is known in the art. For certain applications for example, it may be necessary to incorporate a barrier layer, i.e. a layer which is impermeable to oxygen, into the film structure. This can be achieved using conventional lamination techniques or by coextrusion.

### Film preparation

For film formation using polymer mixtures the different polymer components (e.g. within layers (A), (B) and optional (C)) are typically intimately mixed prior to extrusion and blowing of the film as is well known in the art. It is especially preferred to thoroughly blend the components, for example using a twin screw extruder, preferably a counter-rotating extruder prior to extrusion and film blowing.

The preparation process of a uniaxially oriented in MD multilayer film of the invention comprises at least the steps of forming a layered film structure and stretching the obtained multilayer film in the machine direction in a draw ratio of at least 1:3.

As to the first step of the preparation process, the layered structure of the film of the invention may be prepared by any conventional film formation process including extrusion procedures, such as cast film or blown film extrusion, lamination processes or any combination thereof. AB and ABC films are preferably produced by extrusion.

Particularly preferably the multilayer film of layers (A), (B) and optionally (C) is formed by blown film extrusion, more preferably by blown film coextrusion processes as described above. Typically the compositions providing layers (A), (B) and optionally (C) will be blown (co)extruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.2 to 6, preferably 1.5 to 4.

The obtained, preferably coextruded, multilayer film is subjected to a subsequent stretching step, wherein the multilayer film is stretched in the machine direction. Stretching may be carried out by any conventional technique using any conventional stretching devices which are well known to those skilled in the art. E.g. the film may be coextruded to first form a bubble which is then collapsed and cooled, if necessary, and the obtained tubular film is stretched in line. Alternatively, the coextruded bubble may be collapsed and split into two film laminates. The two films can then be stretched separately in a winding machine.

Stretching is preferably carried out at a temperature in the range 70-90 °C, e.g. about 80 °C. Any conventional stretching rate may be used, e.g. 2 to 40 %/second.

Preferably, the film is stretched only in the MD. The effect of stretching in only one direction is to uniaxially orient the film.

The film is stretched at least 3 times, preferably 3 to 10 times, its original length in the machine direction. This is stated herein as a draw ratio of at least 1:3, i.e. "1" represents the original length of the film and "3" denotes that it has been stretched to 3 times that original length. Preferred films of the invention are stretched in a draw ratio of at least 1:4, more preferably between 1:5 and 1:8, e.g. between 1:5 and 1:7. An effect of stretching (or drawing) is that the thickness of the film is similarly reduced. Thus a draw ratio of at least 1:3 preferably also means that the thickness of the film is at least three times less than the original thickness.

Blow extrusion and stretching techniques are well known in the art, e.g. in EP-A-299750.

The film preparation process steps of the invention are known and may be carried out in one film line in a manner known in the art. Such film lines are commercially available.

The final uniaxially oriented in MD films can be further processed, e.g. laminated on a substrate. Preferably, however, the films are used in non-laminated film applications.

The films obtained by the processes of the invention can be used for preparing packaging, such as sacks or bags in a known manner. Alternatively, the film may be further processed to tubular films which are either used directly in conventional vertical or horizontal form-fill-seal machines as well known in the art or are made into tubular films by conventional tube making machines and used thereafter in packaging. This may be carried out in-line during film production or off-line by conventional techniques. The tubular film can then be fed to a form, fill and seal (FFS) machine for use in packaging.

A further advantage of the film of the invention is the good processability of the polymer materials. The LLDPE combination of the invention enables, for example, high production rates and decreased film thicknesses.

### Film properties

In films comprising a layer (A) and a layer (B), each layer preferably forms 30 to 70 %, more preferably 40 to 60 %, e.g. about 50 % of the thickness of the film.

In films comprising, preferably consisting of, layers (A), (B) and (C), layer (A) preferably forms 10 to 35 % of the thickness of the film, layer (B) forms 30 to 80 % of the thickness of the film and layer (C) preferably forms 10 to 35 % of the thickness of the film. In such films the layers (A) and, if present, (C) may be of equal thickness. Thus the film thickness distribution (%) of a ABC layer is preferably 0-35%/30-80%/10-35% of the total film thickness (100%).

The films of the invention typically have a starting (or original) thickness of 400 µm or less, preferably 40 to 300 µm, more preferably 50 to 250 µm prior to the stretching step.

After stretching, the final thickness of the uniaxially oriented in MD films, preferably ABC layer films, of the invention is typically 120 µm or less, preferably 10 to 100 µm, more preferably 15 to 80 µm, still more preferably 20 to 50 µm, e.g. 25 to 40 µm.

The films/sacks and bags of the invention exhibit a remarkable combination of impact resistance, i.e. impact strength, and tear resistance in the machine direction whilst having a thickness of 120 µm or less, preferably 80 µm or less, e.g. about 20-40 µm.

The general definitions for film properties given herein were determined using uniaxially stretched in MD three-layer ABC-film samples with original thickness of 150 µm before stretching, a final film thickness of 25 µm after stretching and thickness distribution (%) of 20/60/20 of the total film thickness. The film samples used for the determination of film properties were made according to the method described below under "**Film Sample Preparation**", unless otherwise stated under the description of "**Determination methods**".

As mentioned above, the films of the present invention exhibit remarkable impact resistance expressed herein as relative impact strength as determined according to the method described below under "**Determination methods**". The relative impact resistance is preferably at least 2 g/µm, preferably at least 3 g/µm. The upper limit for said relative impact strength is not critical and may be e.g. 10 g/µm.

The films of the invention also exhibit surprisingly high tear resistance in the machine direction expressed as relative tear resistance in the machine direction as determined according to the method described below under "**Determination methods**. Said relative tear resistance in MD is typically at least 40 N/mm, preferably at least 60 N/mm, more preferably at least 80 N/mm. The upper limit for said relative tear resistance is not critical and may be e.g. 200 N/mm, e.g. 100 N/mm.

The films of the invention may also preferably have very good stiffness properties. The film combination of the invention may provide a Tensile 1 %(0.05-1.05) Secant Modulus in MD of 400 MPa or more, preferably 500 MPa or more. The upper limit is not crtical and could be e.g. less than 1300 MPa.

The Tensile strength in MD is typically at least 50 MPa, preferably at least 100 MPa, more preferably at least 150 MPa. The upper limit is not critical and could be e.g. 300 MPa.

The Strain at break in MD is typically less than 400 %, preferably less than 200 %, more preferably less than 100 %. The lower limit may be 5 %.

In addition to mechanical properties, the films of the invention have very good optical properties. Typically the relative haze, i.e. haze/thickness (%/µm), is less than 1.6, preferably less than 1.0, more preferably less than 0.5, even as low as 0.1-0.2. In one embodiment of the invention, the films, wherein the outer layers comprise mLLDPE as the major component, have preferably the above given haze properties.

The processing of the films e.g. in printing, lamination and packaging machines is excellent due to the mechanical properties.

The films of the invention, especially ABC films, may therefore also be used in flexible packaging. The oriented films may, for example, be printed (e.g. flexoprinted or laminated) onto other substrates and films (e.g. films made from polyethylene, polypropylene, PET or polyacrylic acid) and the resulting films/laminates converted into bags or pouches. Any shape and/or size of bag may be prepared.

Indeed the attractive properties of the films of the invention mean they have a wide variety of applications but are of particular interest in packaging, e.g. in formation of packaging articles, such as bags and sacks. The uniaxially in MD oriented films of the invention are particularly suitable for packaging articles for loads up to 10 kg, such as sacks and bags intended to contain materials up to 5 kg in weight, e.g. 2-5 kg in weight.

The invention will now be described with reference to the following nonlimiting examples.

### Determination methods

Unless otherwise stated, the samples used for the measurements to define the above and below properties of the polymers were polymer samples prepared in accordance with the standards specified.

Unless otherwise stated and/or specified in a standard, the film samples used for the measurements to define the above and below properties of the films were prepared as described under the heading "**Film Sample Preparation**".

**Density** of the materials is measured according to ISO 1183:1987 (E), method D, with isopropanol-water as gradient liquid. The cooling rate of the plaques when crystallising the samples was 15 °C/min. Conditioning time was 16 hours.

### Melt Flow Rate (MFR) or Melt Index (MI)

The melt flow rate (MFR) is determined according to ISO 1133 and is indicated in g/10 min. The MFR is an indication of the melt viscosity of the polymer. The MFR is determined at 190°C for PE and at 230 °C for PP. The load under which the melt flow rate is determined is usually indicated as a subscript, for instance MFR₂ is measured under 2.16 kg load, MFR₅ is measured under 5 kg load or MFR₂, is measured under 21.6 kg load.

### Molecular weights, molecular weight distribution, Mn, Mw, MWD

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 µL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 19 x10⁻³ dL/g and a: 0.655 for PS, and K: 39 x10⁻³ dL/g and a: 0.725 for PE). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

**Tm and Tcr** were both measured according to ISO 11357-1 on Perkin Elmer DSC-7 differential scanning calorimetry. Heating curves were taken from -10°C to 200°C at 10°C/min. Hold for 10 min at 200°C. Cooling curves were taken from 200°C to - 10°C per min. Melting and crystallization temperatures were taken as the peaks of endotherms and exotherms. The degree of crystallinity was calculated by comparison with heat of fusion of a perfectly crystalline polyethylene, i.e. 290 J/g.

**Comonomer Content (%wt and %mol)** was determined by using 13 C-NMR. The ¹³C-NMR spectra were recorded on Bruker 400 MHz spectrometer at 130 °C from samples dissolved in 1,2,4-trichlorobenzene/benzene-d₆ (90/10 w/w). Conversion between %wt and %mol can be carried out by calculation.

**Vicat softening temperature (°C)** was determined according to (A) ISO 306.

**Impact Strength** is determined on Dart-drop (g/50%). Dart-drop is measured using ISO 7765-1, method "A". A dart with a 38 mm diameter hemispherical head is dropped from a height of 0.66 m onto a film sample clamped over a hole. If the specimen fails, the weight of the dart is reduced and if it does not fail the weight is increased. At least 20 specimens are tested. The weight resulting in failure of 50% of the specimens is calculated and this provides the dart drop impact (DDI) value (g). The relative DDI (g/µm) is then calculated by dividing the DDI by the thickness of the film.

**Tear resistance (determined as Elmendorf tear (N):** Applies for the measurement both in machine direction and in transverse direction. The tear strength is measured using the ISO 6383/2 method. The force required to propagate tearing across a film sample is measured using a pendulum device. The pendulum swings under gravity through an arc, tearing the specimen from pre-cut slit. The specimen is fixed on one side by the pendulum and on the other side by a stationary clamp. The tear resistance is the force required to tear the specimen. The relative tear resistance (N/mm) is then calculated by dividing the tear resistance by the thickness of the film.

**Tensile modulus** (secant modulus, 0.05-1.05% ) is measured according to ASTM D 882-A on film samples prepared as described under below "**Film Sample preparation**". The speed of testing is 5mm/min. The test temperature is 23°C. Width of the film was 25 mm.

**Tensile Strain at break and tensile strength** are measured according to ISO 527-3 on film samples prepared as described under the "**Film Sample preparation**" and in tables with film thickness as given in Table 2. The speed of testing is 500 mm/min. The test temperature is 23°C. Width of the film was 25 mm.

**Haze** is measured according to ASTM D '1003. The relative haze is calculated by dividing the haze% of a film sample by the thickness of the film (haze%/µm). The film sample was a blown film sample prepared as described under **"Film sample preparation**".

### EXAMPLES

mLLDPE 1: A unimodal mLLDPE having a MFR₂ of 1.3 g/10 min and a density of 922 kg/m³.

mLLDPE 2 : A multimodal mLLDPE having a MFR₂ of 1.8 g/10 min and a density of 915 kg/m³.

znMDPE 1: A multimodal znMDPE having a MFR₂ of 0.3 g/10 min and a density of 946 kg/m³.

znLLDPE 2: A multimodal znLLDPE having a MFR₂ of 0.2 g/10 min and a density of 923 kg/m³.

znLLDPE 3: A multimodal znLLDPE having a MFR₂ of 0.2 g/10 min and a density of 931 kg/m³.

LDPE 1: A high pressure LDPE having a MFR₂ of 0.75 g/10min, a density of 927 kg/m³, a Tm of 115 °C and a Vicat softening temperature of 101 °C (ISO 306). This polymer is commerically available from Borealis A/S.

### Preparation of Polymers

### Example 1: Polymerisation of mLLDPE 2

### Catalyst preparation example

**Complex:** The catalyst complex used in the polymerisation example was a silica supported bis(n-butyl cyclopentadienyl)hafnium dibenzyl, (n-BuCp)₂Hf(CH₂Ph)₂, and it was prepared according to "Catalyst Preparation Example 2" of WO2005/002744. The starting complex, bis(n-butyl cyclopentadienyl)hafnium dichloride, was prepared as described in "Catalyst Preparation Example 1" of said WO 2005/002744.

**Activated catalyst system:** Complex solution of 0.80 ml toluene, 38.2 mg (n-BuCp)₂Hf(CH₂Ph)₂ and 2.80 ml 30 wt% methylalumoxane in toluene (MAO, supplied by Albemarle) was prepared. Precontact time was 60 minutes. The resulting complex solution was added slowly onto 2.0 g activated silica (commercial silica carrier, XPO2485A, having an average particle size 20µm, supplier: Grace). Contact time was 2 h at 24°C. The catalyst was dried under nitrogen purge for 3 h at 50°C. The obtained catalyst had Al/Hf of 200 mol/mol; Hf 0.40 wt%.

### Polymerisation example:

The polymerisation was carried out in a continuously operated pilot polymerisation process. A prepolymerisation step in 50 dm³ loop reactor, at temperature of 60°C and pressure of 63 bar in the presence of the catalyst, ethylene, 1-butene as a comonomer and propane as diluent in amounts given in table 1 below, preceded the actual polymerisation in two stage loop-gas phase reactor system. The reaction product obtained from the prepolymerisation step was fed to the actual loop reactor having a volume 500 dm³ and ethylene, hydrogen, 1-butene as comonomer and propane as diluent were fed in amounts that the ethylene concentration in the liquid phase of the loop reactor was 6,5 mol-%. The other amounts and ratios of the feeds are given in table 1 below. The loop reactor was operated at 85°C temperature and 60 bar pressure. The formed polymer (LMW component) had a melt index MFR₂ of 110 g/10 min at 26 kg/h.

The slurry was intermittently withdrawn from the reactor by using a settling leg and directed to a flash tank operated at a temperature of about 50°C and a pressure of about 3 bar.

From the flash tank the powder, containing a small amount of residual hydrocarbons, was transferred into a gas phase reactor operated at 80°C temperature and 20 bar pressure. Into the gas phase reactor was also introduced additional ethylene nitrogen as inert gas as well as 1-butene and 1-hexene as comonomers in such amounts that the ethylene concentration in the circulating gas was 50 mol-%. The ratio of hydrogen to ethylene, the ratio of comonomers to ethylene and the polymer production rate are given in the below table 1. The production rate was 28 kg/h.
The production split between the loop and gas phase reactors was thus 50/50 wt-%.

The polymer collected from the gas phase reactor was stabilised by adding to the powder 1500ppm Irganox B215. The stabilised polymer was then extruded and pelletised under nitrogen atmosphere with a CIM90P extruder, manufactured by Japan Steel Works. The melt temperature was 214 °C, throughput 221 kg/h and the specific energy input (SEI) was 260 kWh/kg.

**Table 1: Polymerisation conditions and the product properties of the obtained products of example 1**

| Polymerization conditions | Unit | Ex 1 mLLDPE 2 |
|---|---|---|
| **Prepolymerisation** | | |
| temperature | °C | 60 |
| pressure | bar | 63 |
| Catalyst feed | g/h | 33 |
| C2 feed | kg/h | 1,5 |
| C4 feed | g/h | 58 |
| | | |

| **Loop reactor** | | |
|---|---|---|
| C2 concentration | mol-% | 6,5 |
| H2/C2 ratio | mol/kmol | 0,56 |
| C4/C2 ratio | mol/kmol | 107 |
| C6/C2 ratio | mol/kmol | - |
| MFR₂ | g/10 min. | 110 |
| Density | kg/m3 | 938 |
| Prod. rate | kg/h | 26 |

| **Gas phase reactor** | | |
|---|---|---|
| C2 concentration | mol-% | 50 |
| H2/C2 ratio | mol/kmol | 0,44 |
| C4/C2 ratio | mol/kmol | 15 |
| C6/C2 ratio (1-hexene) | mol/kmol | 19 |
| Prod. rate | kg/h | 28 |
| MFR₂ | g/10 min. | 1.9 |
| Density | kg/m³ | 914 |

| **Final product** | | |
|---|---|---|
| Prod. split loop/GPR | wt% | 50/50 |
| Irganox B215 | ppm | 1500 |
| CIM90P throughput | kg/h | 221 |
| CIM90P extruder melt temp. | °C | 214 |
| CIM90P SEI (specific energy input) | kWh/kg | 260 |
| Pellet properties | | |
| Density of the pelletized final polymer, | kg/m³ | 915 |
| MFR₂ of the pelletized final polymer | g/10 min | 1,8 |

**Example 2: mLLDPE 1 -** A unimodal ethylene hexene copolymer was produced using a bis(n-butylcyclopentadienyl) hafnium dibenzyl catalyst in a slurry loop reactor at the polymerization conditions given below. For the preparation of the catalyst system, see example 1 above.

### Polymerisation conditions:

| | |
|---|---|
| Pressure: | 42 bar |
| C2 amount in flash gas: | 5 wt% |
| C6/C2 in flash gas: | 130 mol/kmol |
| Temperature: | 86°C |
| Residence time: | 40 to 60 minutes |

After collecting the polymer it was blended with conventional additives (stabiliser and polymer processing aid) and extruded into pellets in a counterrotating twinscrew extruder JSW CIM90P. The obtained unimodal mLLDPE polymer (polymer 3) had the density of 922 kg/m³ and MFR₂ of 1.3 g/10min.

### Examples 3-5:

### Example 3: znMDPE 1

A multimodal znMDPE polymer was prepared in a pilot scale multistage reactor system containing a loop reactor and a gas phase reactor. A prepolymerisation step preceded the actual polymerisation step. The prepolymerisation stage was carried out in slurry in a 50 dm³ loop reactor at about 80 °C in a pressure of about 65 bar using the polymerisation catalyst prepared according to Example 1 of WO 2004/000902 and triethylaluminium as the cocatalyst. The molar ratio of aluminium of the cocatalyst to titanium of the catalyst was about 20. Ethylene was fed in a ratio of (200g of C2)/(1 g/catalyst). Propane was used as the diluent and hydrogen was fed in amount to adjust the MFR₂ of the prepolymer to about 10 g/10 min. The obtained slurry together with prepolymerised catalyst and triethyl aluminium cocatalyst were transferred to the actual polymerisation step, i.e.introduced into a 500 dm³ loop reactor, wherein a continuous feed of propane, ethylene and hydrogen was also introduced. The ratio of H2/C2 in the reaction mixture was 395 mol/kmol. The loop reactor was operated at 95 °C temperature and 60 bar pressure. The process conditions were adjusted as shown in Table 2 to form polymer having an MFR₂ of 400 g/10 min and a density of about 972 kg/m³ at a production rate of about 30 kg/h. The slurry was then transferred to a fluidised bed gas phase reactor, where also additional ethylene, 1-butene comonomer and hydrogen were added, together with nitrogen as an inert gas to produce the HMW component in the presence of the LMW component. The ratio of H2/C2 in the recycle gas was 48 mol/kmol and the ratio of C4/C2 was 70 mol/kmol. The gas phase reactor was operated at a temperature of 80 °C and a pressure of 20 bar. The production rate of the polymer was about 75 kg/h. The split (wt%) loop/gas phase was 43/57. The polymer obtained from the gas phase reactor had MFR₂ of 0.25 g/10 min and a density of about 945 kg/m³.

The reactor powder was then stabilised with conventional additives and pelletized in a known manner using CIM90P counter-rotating twin screw extruder manufactured by Japan Steel Works. The product properties of the pelletized final polymers are given in table 2 below.

**Example 4:** znLLDPE 2, **Example 5:** znLLDPE 3 were prepared according to the method described for znMDPE 1, except the reaction conditions were adjusted in a known manner to provide polymers with desired properties. The polymerisation conditions and polymer properties are given in table 2 below. In the case of znLLDPE 2, a comonomer, 1-butene, was added to the loop reactor in amounts as given in table 2 for producing LMW ethylene copolymer.

**Table 2: Polymerisation conditions and the product properties of the obtained products of example 3-5**

| **Polymer** | Ex 3. znMDPE 1 | Ex. 4 znLLDPE 2 | Ex. 5 znLLDPE 3 |
|---|---|---|---|
| Ethylene concentration in loop reactor, mol-% | 6.7 | 6.7 | 6.8 |
| Hydrogen to ethylene ratio in loop reactor, mol/kmol | 395 | 240 | 350 |
| 1-butene to ethylene mole ratio in loop reactor, mol/kmol | - | 570 | - |
| Polymer production rate in loop reactor, kg/h | 30 | 30 | 30 |
| MFR₂ of polymer produced in loop reactor, g/10 min | 400 | 300 | 300 |
| Density of polymer produced in loop reactor, kg/m³ | 972 | 951 | 972 |
| Ethylene concentration in gas phase reactor, mol-% | 19 | 19 | 22 |
| Hydrogen to ethylene ratio in gas phase reactor, mol/kmol | 48 | 7 | 8 |
| 1-butene to ethylene mole ratio in gas phase reactor, mol/kmol | 70 | 460 | 450 |
| Polymer production rate in gpr, kg/h | 75 | 75 | 75 |
| Split, loop/gpr | 43/57 | 41/59 | 41/59 |
| MFR₂ of the pelletized final polymer, g/10 min | 0.3 | 0.2 | 0.2 |
| Density of the pelletized final polymer, kg/m³ | 946 | 923 | 931 |

### Film Sample Preparation

Films having an ABC-structure were coextruded on a 3-layer Windmöller&Hölscher Varex coextrusion line with die diameter 200mm, at a blow up ratio (BUR) of 1:3, frost line height 600 mm and Die gap 1.2 mm. The temperature settings on the three extruders were A=210°C / B=210°C / C=210°C and the temperature setting on the extruder die was 200°C. The formed films have thicknesses as shown in Table 3 and the composition of each of the films is also presented in Table 3.

Stretching was carried out using a monodirectional stretching machine manufactured by Hosokawa Alpine AG in Augsburg/Germany. The film obtained from blown film extrusion was pulled into the orientation machine then stretched between two sets of nip rollers where the second pair runs at higher speed than the first pair resulting in the desired draw ratio. Stretching is carried out with the draw ratios presented in Table 3. After exiting the stretching machine the film is fed into a conventional film winder where the film is slit to its desired width and wound to form reels.

The film samples ABC used for the determinations of general film properties as defined in the description were prepared as described above and had starting film thickness of 150 µm before stretching, draw ratio of 1:6, final film thickness of 25 µm after stretching and a thickness distribution (%) of 20/60/20 of the total film thickness.
The mechanical properties of the resulting layered film are summarised in Table 4.

**Table 3**

| | Composition | | | | | | |
|---|---|---|---|---|---|---|---|
| | Layer (A) | Layer (B) | Layer (C) | Layer thickness distribution (%) | Initial film thickness (µm) | Draw Ratio | Final film thickness (µm) |
| 1 | 85 % mLLDPE 1 | 80 % znLLDPE 3 | Same as layer (A) | 15/70/15 | 150 | 1:6 | 25 |
| | 15 % LDPE 1 | 20 % mLLDPE 1 | | | | | |
| 2 | 20 % mLLDPE 2 | 70 % znLLDPE 3 | 100 % znLLDPE 2 | 25/50/25 | 200 | 1:5.7 | 35 |
| | 80 % znLLDPE 2 | 20 % znMDPE 1 | | | | | |
| 3* | 80 % mLLDPE 1 | 80 % znLLDPE 3 | Same as layer (A) | 20/60/20 | 42 | Non-stretched | 42 |
| | 20% LDPE 1 | 20 % mLLDPE 1 | | | | | |
| 4* | | 100% LDPE 1 | | | 40 | Non-stretched | 40 |

| | | | | | | | |
|---|---|---|---|---|---|---|---|
| Film 3* was a non-stretched reference film and Film 4* was a comparative example representing a typical prior art LDPE film used for packaging applications up to 5 kg loads | | | | | | | |

The mechanical properties of each of the resulting stretched films was determined and the results are summarised in Table 4:

| | Film 1 | Film 2 | Film 3* | Film 4* |
|---|---|---|---|---|
| Thickness (µm) | 25 | 35 | 42 | 40 |
| Dart Drop Impact (DDI) (g) | 90 | 130 | 220 | 120 |
| Relative DDI (g/µm) | 3.6 | 3.7 | 5.2 | 3.0 |
| Tear Resistance in MD (N) | 2.7 | 2.9 | 1.8 | 4.0 |
| Relative tear resistance in MD (N/mm) | 108.0 | 82.9 | 42.9 | 100 |
| Tensile modulus MD (MPa) | 570 | 545 | 285 | 230 |
| Tensile strength (MPa) | 183 | 157 | 43 | |
| Strain at break (%) | 62 | 60 | 410 | |
| Haze/thickness (%/µm) | 0.18 | | 0.19 | 0.25 |

| | | | | |
|---|---|---|---|---|
| * comparative examples | | | | |

The results show that the films of the invention have a high impact strength for their thickness as well as a surprisingly high tear resistance in the machine direction. The latter is entirely unexpected as it is well known that a problem associated with uniaxial orientation is that tear strength in the machine direction is significantly reduced.

## Claims

1. A uniaxially oriented multilayer film comprising at least (i) a layer (A) and (ii) a layer (B), wherein
said layer (A) comprises a linear low density polyethylene (LLDPE) comprising (e.g. selected from):
- a multimodal LLDPE produced using a Ziegler Natta catalyst (znLLDPE), or
- a LLDPE produced using a single site catalyst (mLLDPE) or
- a mixture of a mLLDPE and a multimodal znLLDPE,
said layer (B) comprises a multimodal LLDPE, and
said multilayer film is in the form of a stretched film which is uniaxially oriented in the machine direction (MD) in a draw ratio of at least 1:3.

2. A film as claimed in claim 1 in the form of a stretched film which is uniaxially oriented in the MD in a draw ratio of 1:3 to 1:10.

3. A film as claimed in claim 1 or claim 2 having a thickness of less than 120 µm.

4. A film as claimed in any preceding claim which is not laminated.

5. A film as claimed in any preceding claim, further comprising (iii) a layer (C), preferably in the following order:
(i) layer (A),
(ii) layer (B) and
(iii) layer (C).

6. A film as claimed in claim 5, wherein said layer (C) comprises a LLDPE.

7. A film as claimed in any one of claims 5 to 6, wherein said layer (C) is identical to layer (A).

8. A film as claimed in any preceding claim, wherein layer (A) comprises a mLLDPE, preferably a unimodal mLLDPE composition or a multimodal mLLDPE composition.

9. A film as claimed in any preceding claim, wherein layer (A) further comprises low density polyethylene produced in high pressure polymerisation (LDPE), preferably layer (A) consists of a mLLDPE and LDPE.

10. A film as claimed in any preceding claim, wherein layer (A) comprises a multimodal znLLDPE and a mLLDPE, preferably layer (A) consists of a multimodal znLLDPE and mLLDPE.

11. A film as claimed in any preceding claim, wherein layer (B) comprises a multimodal znLLDPE composition.

12. A film as claimed in any preceding claim, wherein layer (B) further comprises a mLLDPE composition.

13. A process for the preparation of a multilayer film as claimed in any one of claims 1 to 12 comprising forming a film by extruding, preferably coextruding,
a composition (a) comprising a multimodal znLLDPE, a mLLDPE or a mixture thereof as layer (A),
a composition (b) comprising a multimodal LLDPE as layer (B), and
optionally, a composition (c) comprising a LLDPE as layer (C),
and stretching said film in the machine direction in a draw ratio of at least 1:3, preferably, 1:3 to 1:10.

14. A process as claimed in claim 13 comprising blown film extrusion.

15. An article comprising a film as claimed in any one of claims 1 to 12, e.g. a sack or bag.

## Patentansprüche

1. Uniaxial orientierte mehrschichtige Folie, die zumindest (i) eine Schicht (A) und (ii) eine Schicht (B) umfaßt, wobei
die Schicht (A) ein lineares Polyethylen niedriger Dichte (LLDPE) umfaßt, welches aufweist (z.B. ausgewählt ist aus):
- ein multimodales LLDPE, das unter Verwendung eines Ziegler-Natta-Katalysators hergestellt worden ist (znLLDPE), oder
- ein LLDPE, das unter Verwendung eines Katalysators mit einheitlichen aktiven Zentren hergestellt worden ist (mLLDPE), oder
- ein Gemisch aus einem mLLDPE und einem multimodalen znLLDPE,
die Schicht (B) ein multimodales LLDPE umfaßt und wobei
die mehrschichtige Folie in Form einer gereckten Folie vorliegt, die in Maschinenrichtung (MD) bei einem Streckverhältnis von mindestens 1:3 uniaxial orientiert ist.

2. Folie nach Anspruch 1 in Form einer gereckten Folie, die in MD bei einem Streckverhältnis von 1:3 bis 1:10 uniaxial orientiert ist.

3. Folie nach Anspruch 1 oder Anspruch 2, die eine Dicke von weniger als 120 µm aufweist.

4. Folie nach einem der vorstehenden Ansprüche, die nicht laminiert ist.

5. Folie nach einem der vorstehenden Ansprüche, die ferner (iii) eine Schicht (C), vorzugsweise in der folgenden Reihenfolge, umfaßt:
(i) Schicht (A),
(ii) Schicht (B) und
(iii) Schicht (C).

6. Folie nach Anspruch 5, wobei die Schicht (C) ein LLDPE umfaßt.

7. Folie nach einem der Ansprüche 5 bis 6, wobei die Schicht (C) mit der Schicht (A) identisch ist.

8. Folie nach einem der vorstehenden Ansprüche, wobei die Schicht (A) ein mLLDPE, vorzugsweise eine unimodale mLLDPE-Zusammensetzung oder eine multimodale mLLDPE-Zusammensetzung umfaßt.

9. Folie nach einem der vorstehenden Ansprüche, wobei die Schicht (A) ferner Polyethylen niedriger Dichte umfaßt, das in einer Hochdruckpolymerisation erzeugt worden ist (LDPE), vorzugsweise besteht die Schicht (A) aus einem mLLDPE und LDPE.

10. Folie nach einem der vorstehenden Ansprüche, wobei die Schicht (A) ein multimodales znLLDPE und ein mLLDPE umfaßt, vorzugsweise besteht die Schicht (A) aus einem multimodalen znLLDPE und mLLDPE.

11. Folie nach einem der vorstehenden Ansprüche, wobei die Schicht (B) eine multimodale znLLDPE-Zusammensetzung umfaßt.

12. Folie nach einem der vorstehenden Ansprüche, wobei die Schicht (B) ferner eine mLLDPE-Zusammensetzung umfaßt.

13. Verfahren zur Herstellung einer mehrschichtigen Folie nach einem der Ansprüche 1 bis 12, umfassend das Formen einer Folie durch Extrusion, vorzugsweise Coextrusion, von
einer Zusammensetzung (a), die ein multimodales znLLDPE, ein mLLDPE oder ein Gemisch davon umfaßt, als Schicht (A),
einer Zusammensetzung (b), die ein multimodales LLDPE umfaßt, als Schicht (B) und
gegebenenfalls einer Zusammensetzung (c), die ein LLDPE umfaßt, als Schicht (C),
und das Recken der Folie in Maschinenrichtung bei einem Streckverhältnis von mindestens 1:3, vorzugsweise 1:3 bis 1:10.

14. Verfahren nach Anspruch 13, das das Extrudieren von Blasfolien umfaßt.

15. Gegenstand, der eine Folie nach einem der Ansprüche 1 bis 12 umfaßt, z.B. ein Sack oder ein Beutel.

## Revendications

1. Film multicouche orienté de manière uniaxiale comprenant au moins (i) une couche (A) et (ii) une couche (B), dans lequel
ladite couche (A) comprend un polyéthylène linéaire basse densité (LDPE) comprenant (par exemple, choisi parmi) :
- un LLDPE multimodal produit au moyen d'un catalyseur de Ziegler-Natta (znLLDPE), ou
- un LLDPE produit au moyen d'un catalyseur mono-site (mLLDPE), ou
- un mélange composé d'un mLLDPE et d'un znLLDPE multimodal,
ladite couche (B) comprend un LLDPE multimodal, et
ledit film multicouche est sous la forme d'un film étiré qui est orienté de manière uniaxiale dans le sens machine (SM) avec un rapport d'étirage d'au moins 1 : 3.

2. Film selon la revendication 1, sous la forme d'un film étiré qui est orienté de manière uniaxiale dans le SM avec un rapport d'étirage de 1 : 3 à 1 : 10.

3. Film selon la revendication 1 ou la revendication 2, possédant une épaisseur inférieure à 120 µm.

4. Film selon l'une quelconque des revendications précédentes, qui n'est pas stratifié.

5. Film selon l'une quelconque des revendications précédentes, comprenant en outre (iii) une couche (C), de préférence dans l'ordre suivant :
(i) une couche (A),
(ii) une couche (B) et
(iii) une couche (C).

6. Film selon la revendication 5, dans lequel ladite couche (C) comprend un LLDPE.

7. Film selon l'une quelconque des revendications 5 à 6, dans lequel ladite couche (C) est identique à la couche (A).

8. Film selon l'une quelconque des revendications précédentes, dans lequel la couche (A) comprend un mLLDPE. de préférence une composition de mLLDPE unimodal ou une composition de mLLDPE multimodal.

9. Film selon l'une quelconque des revendications précédentes, dans lequel la couche (A) comprend en outre un polyéthylène basse densité produit par polymérisation à haute pression (LDPE), de préférence la couche (A) est composée d'un mLLDPE et d'un LDPE.

10. Film selon l'une quelconque des revendications précédentes, dans lequel la couche (A) comprend un znLLDPE multimodal et un mLLDPE, de préférence la couche (A) est composée d'un znLLDPE multimodal et d'un mLLDPE.

11. Film selon l'une quelconque des revendications précédentes, dans lequel la couche (B) comprend une composition de znLLDPE multimodal.

12. Film selon l'une quelconque des revendications précédentes, dans lequel la couche (B) comprend en outre une composition de mLLDPE.

13. Procédé de préparation d'un film multicouche selon l'une quelconque des revendications 1 à 12, comprenant la formation d'un film par extrusion, de préférence par coextrusion,
d'une composition (a) comprenant un znLLDPE Multimodal, un mLLDPE ou l'un de leurs mélanges sous la forme d'une couche (A),
d'une composition (b) comprenant un LLDPE multimodal sous la forme d'une couche (B), et
facultativement, d'une composition (c) comprenant un LLDPE sous la forme d'une couche (C),
et l'étirage dudit film dans le sens machine avec un rapport d'étirage d' au moins 1 : 3, de préférence de 1 : 3 à 1 : 10.

14. Procédé selon la revendication 13, comprenant l'extrusion d'un film soufflé.

15. Article comprenant un film selon l'une quelconque des revendications 1 à 12, par exemple un grand sac ou un sac.
